(19) Europäisches Patentamt / European Patent Office / Office européen des brevets

(11) **EP 4 095 363 B1**

(12) **EUROPÄISCHE PATENTSCHRIFT**

(45) Veröffentlichungstag und Bekanntmachung des Hinweises auf die Patenterteilung:
**27.03.2024   Patentblatt 2024/13**

(21) Anmeldenummer: **22175310.6**

(22) Anmeldetag: **25.05.2022**

(51) Internationale Patentklassifikation (IPC):
**F01N 3/20** *(2006.01)*    **F01N 3/021** *(2006.01)*
**F01N 3/10** *(2006.01)*    **F01N 9/00** *(2006.01)*
**F01N 13/00** *(2010.01)*    **F01N 11/00** *(2006.01)*

(52) Gemeinsame Patentklassifikation (CPC):
**F01N 3/2066; F01N 3/021; F01N 3/103; F01N 9/002; F01N 9/005; F01N 11/002; F01N 13/008;** F01N 2610/02; F01N 2900/1404; F01N 2900/1406; F01N 2900/1411; F01N 2900/1602; F01N 2900/1606; Y02T 10/12; Y02T 10/40

(54) **VERFAHREN ZUM ERKENNEN EINER REGENERATIONSNOTWENDIGKEIT FÜR EINEN ABGASPARTIKELFILTER SOWIE ABGASANLAGE**

METHOD FOR DETECTING THE NEED TO REGENERATE AN EXHAUST GAS PARTICULATE FILTER AND EXHAUST GAS SYSTEM

PROCÉDÉ DE DÉTERMINATION D'UN BESOIN DE RÉGÉNÉRATION POUR UN FILTRE PARTICULAIRE DES GAZ D'ÉCHAPPEMENT, AINSI QU'INSTALLATION DE GAZ D'ÉCHAPPEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.05.2021   DE 102021113763**

(43) Veröffentlichungstag der Anmeldung:
**30.11.2022   Patentblatt 2022/48**

(73) Patentinhaber: **Hug Engineering AG
8352 Elsau (CH)**

(72) Erfinder:
• **Gschwend, Dominik
8352 Elsau (CH)**
• **Marberger, Adrian
8352 Elsau (CH)**
• **Hehle, Marc
8352 Elsau (CH)**
• **Schiegg, Simon
8352 Elsau (CH)**
• **Früh, Dominik
8352 Elsau (CH)**

(74) Vertreter: **Prinz & Partner mbB
Patent- und Rechtsanwälte
Rundfunkplatz 2
80335 München (DE)**

(56) Entgegenhaltungen:
WO-A1-94/03711    WO-A1-2016/133443
WO-A1-2016/144492

EP 4 095 363 B1

**Beschreibung**

Die Erfindung betrifft ein Verfahren zum Erkennen einer Regenerationsnotwendigkeit für einen Abgaspartikelfilter.

Darüber hinaus ist die Erfindung auf eine Abgasanlage für einen Verbrennungsmotor gerichtet, die einen Abgaspartikelfilter umfasst. Ferner ist ein Strömungsabschnitt vorgesehen, der strömungsmäßig unverzweigt mit dem Abgaspartikelfilter verbunden ist. Die Abgasanlage hat auch eine erste Drucksensoranordnung zum Erfassen eines ersten Druckabfalls über dem Strömungsabschnitt, eine zweite Drucksensoranordnung zum Erfassen eines zweiten Druckabfalls am Abgaspartikelfilter und einen Temperatursensor zum Erfassen einer Abgastemperatur.

Derartige Abgasanlagen und Verfahren zum Erkennen einer Regenerationsnotwendigkeit für Abgaspartikelfilter sind aus dem Stand der Technik bekannt.

Die WO 2016/133443 A1 offenbart ein Verfahren und das zugehörige System zur Bestimmung eines Durchflusswiderstandes über einen Partikelfilter. Der Durchflusswiderstand wird von einer Verarbeitungseinheit auf der Grundlage von zwei Druckdifferenzen berechnet, die über den Partikelfilter bzw. ein SCR-System gemessen werden. Aus dem Verhältnis der beiden Differenzdruckwerte wird der Strömungswiderstand über dem Partikelfilter ermittelt.

Ferner zeigt die WO 94/03711 A1 ein Verfahren und eine Vorrichtung zur Bestimmung des Beladungsgrades eines im Abgassystem eines Dieselmotors vorgesehenen Partikelfilters. Bei dem Verfahren wird ein Druckabfall über dem Partikelfilter sowie ein Druckabfall über einer Querschnittsverringerung der Abgasanlage gemessen. Die gemessenen Druckwerte werden korreliert, um einen realen Kennwert zu bilden, der dann mit einem Grenzkennwert verglichen wird, um festzustellen, ob ein Regenerationsvorgang notwendig ist.

Die vorbekannten Verfahren und Anlagen beruhen alle auf ähnlichen Prinzipien.

Im Betrieb der Abgasanlage lagern sich Partikel am Abgaspartikelfilter ab. Das ist prinzipiell erwünscht, da auf diese Weise die Partikel nicht an eine Umgebung abgegeben werden, also das Abgas gereinigt wird. Jedoch vergrößert sich auf diese Weise ein durch den Abgaspartikelfilter gebildeter Strömungswiderstand. Um die ordnungsgemäße Funktion der Abgasanlage nicht zu beeinträchtigen, darf der Strömungswiderstand nicht zu groß werden. Zudem bewirkt ein erhöhter Strömungswiderstand auch einen erhöhten Kraftstoffverbrauch eines mit der Abgasanlage gekoppelten Verbrennungsmotors. Bekannte Abgaspartikelfilter müssen daher regelmäßig regeneriert werden. Dabei werden die am Abgasfilter abgelagerten Partikel kontrolliert verbrannt, sodass sich der Strömungswiderstand reduziert. Üblicherweise wird hierzu die Abgastemperatur für eine gewisse Zeit gezielt angehoben. Zu diesem Zweck kann ein Brenner genutzt werden, in dem Kraftstoff verbrannt wird. Alternativ kann die Abgastemperatur mittels des mit der Abgasanlage gekoppelten Verbrennungsmotors angehoben werden.

Die Aufgabe der Erfindung besteht darin, eine verbesserte Abgasanlage bereitzustellen. Insbesondere soll die Abgasanlage einen vergleichsweise geringen Kraftstoffverbrauch aufweisen und/oder bei einem mit der Abgasanlage gekoppelten Verbrennungsmotor zu einem geringen Kraftstoffverbrauch führen.

Die Aufgabe wird durch ein Verfahren der eingangs genannten Art gelöst, das die folgenden Schritte umfasst:

a) Erfassen eines ersten Druckabfalls in einem Strömungsabschnitt einer den Abgaspartikelfilter umfassenden Abgasanlage, wobei der Strömungsabschnitt strömungsmäßig unverzweigt mit dem Abgaspartikelfilter verbunden ist, und wobei im Strömungsabschnitt ein SCR-Katalysator und/oder ein Oxidationskatalysator angeordnet sind bzw. ist, wobei der Strömungsabschnitt stromabwärts des Abgaspartikelfilters positioniert ist, und wobei der erste Druckabfall über dem SCR-Katalysator und/oder dem Oxidationskatalysator ermittelt wird,

b) Erfassen einer Abgastemperatur,

c) Errechnen eines den Abgaspartikelfilter durchströmenden Abgasmassenstroms anhand des ersten Druckabfalls und der Abgastemperatur,

d) Ermitteln eines zweiten Druckabfalls am Abgaspartikelfilter,

e) Erkennen der Regenerationsnotwendigkeit, wenn der zweite Druckabfall einen vorgegebenen, vom Abgasmassenstrom abhängigen Druck-Grenzwert überschreitet.

Dabei lässt sich über den Druckabfall am Strömungsabschnitt und die Abgastemperatur der Abgasmassenstrom mit hoher Präzision errechnen. Diese Berechnung kann innerhalb eines Steuergeräts einer Abgasanlage erfolgen. Eine Weitergabe von Daten zum Abgasmassenstrom beispielsweise von einem Verbrennungsmotor an die Abgasanlage ist somit nicht erforderlich. Die Abgasanlage ist also in dieser Hinsicht eigenständig. Dadurch ist sie gut dafür geeignet, nachgerüstet zu werden und/oder in Verbindung mit Verbrennungsmotoren verwendet zu werden, die lediglich in geringer Stückzahl hergestellt werden. Indem das Erkennen der Regenerationsnotwendigkeit vom Abgasmassenstrom abhängig ist, kann die Regenerationsnotwendigkeit bedarfsgerecht festgestellt werden. Es wird also nicht nach festen Zeitintervallen oder beim Überschreiten eines festen, vom Abgasmassenstrom unabhängigen, Druck-Grenzwertes für den zweiten Druckabfall oder Staudruck am Abgaspartikelfilter regeneriert. Vorliegend wird insbesondere bei höheren Abgasmassenströmen ein höherer Druck-Grenzwert herangezogen als bei niedrigeren Abgasmassenströmen. Im Vergleich zu bekannten Verfahren sind somit über eine Lebensdauer einer zugeordneten Abgasanlage weniger Regenerationsvorgänge notwendig. Dadurch sinken der Kraftstoffverbrauch, die zugehörigen $CO_2$-Emissionen sowie die Betriebskosten für die Abgasanlage sowie damit ausgerüstete Verbrennungsmotoren.

Es wird also derjenige Abgasmassenstrom, der durch den Abgaspartikelfilter strömt, anhand des Druckabfalls bestimmt, der über dem SCR-Katalysator und/oder dem Oxidationskatalysator anfällt. Nachdem der Strömungsabschnitt strömungsmäßig unverzweigt mit dem Abgaspartikelfilter verbunden ist, sind die durch den Abgaspartikelfilter und den Strömungsabschnitt strömenden Abgasmassenströme im Wesentlichen gleich groß. Somit lässt sich der Massenstrom zuverlässig und präzise ermitteln.

Für die Ermittlung des Massenstroms anhand des Druckabfalls werden folgende Gleichungen verwendet.

$$\Delta p = \frac{1}{2}\, \rho\, \varsigma\, v^2 \ (1)$$

$$\dot{m} = \rho\, v\, A \ (2)$$

Dabei ist $\dot{m}$ der Abgasmassenstrom. $\Delta p$ bezeichnet den Druckabfall. Die Dichte ist mit $\rho$ bezeichnet und die Strömungsgeschwindigkeit mit $v$. Ein Strömungsquerschnitt ist mit A bezeichnet. Mit $\varsigma$ ist ein Druckbeiwert angegeben, der lediglich von der Geometrie des betrachteten Strömungsabschnitts abhängt.

Die oben angegebenen Gleichungen (1) und (2) lassen sich ineinander einsetzen, sodass der Massenstrom anhand des Druckabfalls errechnet werden kann. Dabei ist die Dichte temperaturabhängig und kann folglich anhand einer Abgastemperatur bestimmt werden.

Der Druckbeiwert $\varsigma$ ergibt sich aus mehreren Phänomenen. Zunächst einmal fließt die Geometrie der den Strömungsabschnitt bildenden Bauteile ein. Dieser Anteil des Druckbeiwerts kann beispielsweise in einer Simulation oder durch eine Messung bei Inbetriebnahme einer Abgasanlage ermittelt werden.

Auch das Anlagern von Partikeln im Abgaspartikelfilter hat einen Effekt auf den effektiv wirkenden Druckbeiwert $\varsigma$. In diesem Zusammenhang kann zunächst zwischen Rußpartikeln und Aschepartikeln unterschieden werden. Rußpartikel können im Zuge einer Regeneration verbrannt und damit aus dem Abgaspartikelfilter entfernt werden. Anders verhält es sich bei Aschepartikeln, die nicht mehr verbrannt werden können und sich somit über die gesamte Lebensdauer des Abgaspartikelfilters an diesem anlagern. Ein durch die Rußpartikel bewirkter Anteil des Druckbeiwerts $\varsigma$ lässt sich also durch eine Regeneration im Wesentlichen auf null setzen. Ein durch die Aschepartikel verursachter Anteil des Druckbeiwerts $\varsigma$ steigt kontinuierlich über die Lebensdauer des Abgaspartikelfilters. Er kann durch eine Regeneration im Wesentlichen nicht geändert werden.

Diese Phänomene werden beim bedarfsgerechten Erkennen einer Regenerationsnotwendigkeit berücksichtigt, indem der Druck-Grenzwert vom Abgasmassenstrom abhängig ist. In diesem Zusammenhang kann sich insbesondere ergeben, dass am Anfang einer Lebensdauer des Abgaspartikelfilters vergleichsweise große Zeitintervalle zwischen zwei Regenerationsvorgängen liegen. Gegen Ende der Lebensdauer des Abgaspartikelfilters, wenn der durch Aschepartikel verursachte Anteil des Druckbeiwerts $\varsigma$ bereits vergleichsweise groß ist, sind demgegenüber die Zeitintervalle zwischen zwei Regenerationsvorgängen kurz. Über den durch Aschepartikel verursachten Anteil des Druckbeiwerts $\varsigma$ kann darüber hinaus eine Restlebensdauer des Abgaspartikelfilters und/oder eine Zeit bis zu einer anstehenden Wartung abgeschätzt werden, bei der die abgelagerten Aschepartikel zumindest teilweise entfernt werden. Der durch Aschepartikel verursachte Anteil des Druckbeiwerts $\varsigma$ lässt sich anhand eines effektiv wirkenden Druckbeiwerts $\varsigma$ ermitteln, indem der durch Rußpartikel bewirkte Anteil des Druckbeiwerts $\varsigma$ durch eine Regeneration im Wesentlichen auf null gesetzt wird und zudem der rein durch die Geometrie der den Strömungsabschnitt bildenden Bauteile bewirkte Anteil herausgerechnet wird.

Das erfindungsgemäße Verfahren sowie die nachfolgend noch näher beschriebene erfindungsgemäße Abgasanlage werden insbesondere in Verbindung mit leistungsstarken Verbrennungsmotoren verwendet, die häufig auch als Großmotoren bezeichnet werden. Solche Motoren können eine Leistung von mehr als 500 kW bereitstellen. Sie werden beispielsweise in Schiffen, Notstromaggregaten und Lokomotiven eingesetzt.

Der vorgegebene Druck-Grenzwert kann ferner von einer weiteren Abgastemperatur abhängen, die am Abgaspartikelfilter vorherrscht. Insbesondere wird diese Abgastemperatur an einem Strömungseingang des Abgaspartikelfilters erfasst. Somit hängt der Druck-Grenzwert sowohl vom Abgasmassenstrom als auch von der Temperatur des Abgasmassenstroms ab. Das ist gleichbedeutend damit, dass der vorgegebene Druck-Grenzwert von einem Abgasvolumenstrom abhängt, der den Abgaspartikelfilter durchströmt. Die Umrechnung zwischen dem Abgasmassenstrom und dem Abgasvolumenstrom erfolgt über die Dichte, die, wie bereits erläutert, temperaturabhängig ist und somit anhand der weiteren Abgastemperatur bestimmt werden kann. Auf diese Weise kann eine Regenerationsnotwendigkeit mit besonders hoher Präzision ermittelt werden, sodass sich insgesamt vorteilhafte Verbrauchswerte und Betriebskosten ergeben.

Vorteilhafterweise ist die Abgastemperatur eine am SCR-Katalysator und/oder am Oxidationskatalysator vorherrschende Abgastemperatur. Insbesondere wird die Abgastemperatur an einem Strömungseingang des SCR-Katalysators erfasst. Die Abgastemperatur betrifft also den Abgasstrom an derselben Stelle, an der auch der erste Druckabfall auftritt. Somit kann der Massenstrom mit besonders hoher Präzision errechnet werden.

Im Zuge des Verfahrens kann zudem eine Stickoxidkonzentration eines in der Abgasanlage strömenden Abgasvolumenstromes oder Abgasmassenstromes ermittelt werden. Dies kann in an sich bekannter Weise mit einem Stickoxidkonzentrationssensor erfolgen, der kurz auch als NOx-Sensor bezeichnet wird. Der NOx-Sensor ist beispielsweise stromaufwärts des Abgaspartikelfilters angeordnet.

Wenn sowohl die Stickoxidkonzentration als auch der zugehörige Abgasmassenstrom bekannt sind, lässt sich eine absolute Menge, genauer gesagt ein Massenstrom an Stickoxiden bestimmen. Folglich kann ein stromaufwärts des SCR-Katalysators in den Abgasstrom eingespritzter Massen- oder Volumenstrom an Reduktionsmittel genau auf den Massenstrom an Stickoxiden abgestimmt werden. Somit reagiert das eingespritzte Reduktionsmittel im Wesentlichen vollständig mit den im Abgasstrom enthaltenen Stickoxiden. Folglich wird weder ein Überschuss an Reduktionsmittel noch ein Überschuss an Stickoxiden an die Umgebung abgegeben. Es ergeben sich Emissionswerte, die strengen Vorschriften genügen.

Beim Reduktionsmittel handelt es sich zum Beispiel um Harnstoff.

In einer Variante wird der Druck-Grenzwert in Form eines Kennfelds bereitgestellt. Bei diesem Kennfeld ist beispielsweise ein Abgasmassenstrom oder ein Abgasvolumenstrom entlang einer x-Achse aufgetragen. Die zugehörige y-Achse betrifft den zweiten Druckabfall. Der Druck-Grenzwert ergibt sich dann als eine Kurve in diesem Kennfeld. Diese lässt sich beispielsweise durch eine Simulation und/oder durch Versuche ermitteln. Dabei kann die Kurve auch dadurch ermittelt werden, dass zwischen einzelnen, im Kennfeld repräsentierten Betriebspunkten interpoliert wird. Insgesamt lassen sich auf diese Weise Druck-Grenzwerte einfach und zuverlässig bereitstellen.

Ferner kann eine zukünftige Regenerationsnotwendigkeit erkannt werden, wenn der zweite Druckabfall einen vorgegebenen Druck-Warnwert überschreitet, wobei der Druck-Warnwert kleiner ist als der Druck-Grenzwert. Das Erkennen einer zukünftigen Regenerationsnotwendigkeit entspricht dabei mit Bezug auf die akute Regenerationsnotwendigkeit einer Art Vorwarnung. Je nach Betriebsstrategie der Abgasanlage, mittels der das Verfahren ausgeführt wird, kann in Abhängigkeit weiterer Betriebsparameter eine Regeneration auch dann schon durchgeführt werden, wenn der Druck-Warnwert überschritten, der Druck-Grenzwert aber noch nicht erreicht ist. Auf diese Weise wird eine hohe Lebensdauer der Abgasanlage erreicht, da so Situationen vermieden werden können, in denen eine Regeneration zwar notwendig, aber aufgrund äußerer Umstände und/oder aktueller Leistungsanforderungen nicht möglich ist.

Die Aufgabe wird zusätzlich durch eine Abgasanlage der eingangs genannten Art gelöst, mit einem Abgaspartikelfilter, einem Strömungsabschnitt, der strömungsmäßig unverzweigt mit dem Abgaspartikelfilter verbunden ist, wobei im Strömungsabschnitt ein SCR-Katalysator und/oder ein Oxidationskatalysator angeordnet sind bzw. ist, wobei der Strömungsabschnitt stromabwärts des Abgaspartikelfilters positioniert ist, einer ersten Drucksensoranordnung zum Erfassen eines ersten Druckabfalls über dem Strömungsabschnitt, einer zweiten Drucksensoranordnung zum Erfassen eines zweiten Druckabfalls am Abgaspartikelfilter, einem Temperatursensor zum Erfassen einer Abgastemperatur, und einem Steuergerät, das signaltechnisch mit der ersten Drucksensoranordnung, der zweiten Drucksensoranordnung und dem Temperatursensor gekoppelt ist, wobei das Steuergerät dazu ausgebildet ist,

a) einen den Abgaspartikelfilter durchströmenden Abgasmassenstrom anhand eines mittels der ersten Drucksensoranordnung erfassten ersten Druckabfalls und einer mittels des Temperatursensors erfassten Abgastemperatur zu ermitteln, und
b) eine Regenerationsnotwendigkeit für den Abgaspartikelfilter zu erkennen, wenn der mittels der zweiten Drucksensoranordnung erfasste zweite Druckabfall einen vorgegebenen, vom Abgasmassenstrom abhängigen Druck-Grenzwert überschreitet.

Es wird also der erste Druckabfall über dem SCR-Katalysator und/oder dem Oxidationskatalysator gemessen. Auf diese Weise lässt sich der Abgasmassenstrom zuverlässig bestimmen. Folglich kann der Abgaspartikelfilter bedarfsgerecht regeneriert werden. Der Oxidationskatalysator kann in diesem Zusammenhang im selben Gehäuse sitzen wie der SCR-Katalysator.

Dadurch kann eine bedarfsgerechte Regeneration des Abgaspartikelfilters erfolgen, sodass sich im Unterschied zu rein zeitlich gesteuerten Regenerationsintervallen ein reduzierter Kraftstoffverbrauch der Abgasanlage sowie eines damit ausgestatteten Verbrennungsmotors ergibt. Dasselbe gilt gegenüber Regenerationsintervallen, die lediglich auf der Basis eines Grenzwerts für den zweiten Druckabfall oder einen am Abgaspartikelfilter gemessenen Staudruck festgelegt werden, der nicht vom Abgasmassenstrom abhängig ist.

Das Steuergerät kann zusätzlich dazu ausgebildet sein, eine zukünftige Regenerationsnotwendigkeit zu erkennen, wenn der zweite Druckabfall einen vorgegebenen Druck-Warnwert überschreitet, wobei der Druck-Warnwert kleiner ist als der Druck-Grenzwert. Es ergeben sich die bereits hinsichtlich des Verfahrens erläuterten Effekte und Vorteile.

Die Abgasanlage kann auch einen weiteren Temperatursensor umfassen, der im oder am Abgaspartikelfilter angeordnet und signaltechnisch mit dem Steuergerät verbunden ist. Auf diese Weise lässt sich die am Abgaspartikelfilter vorherrschende Abgastemperatur mit hoher Genauigkeit erfassen. Somit kann eine Dichte des den Abgaspartikelfilter durchströmenden Abgasmassenstroms errechnet werden. Der Abgasmassenstrom kann folglich in einen Abgasvolumenstrom konvertiert werden und umgekehrt.

Im Übrigen gelten die hinsichtlich des erfindungsgemäßen Verfahrens erläuterten Effekte und Vorteile auch für die erfindungsgemäße Abgasanlage und umgekehrt.

Die Erfindung wird nachfolgend anhand eines Ausführungsbeispiels erläutert, das in den beigefügten Zeichnungen dargestellt ist. Es zeigen:

- Figur 1 schematisch eine erfindungsgemäße Abgasanlage, mittels der ein erfindungsgemäßes Verfahren ausgeführt werden kann, und

- Figur 2 ein Kennfeld, in dem von einem Abgasvolumenstrom abhängige Druck-Grenzwerte und Druck-Warnwerte für einen Druckabfall am Abgaspartikelfilter der Abgasanlage aus Figur 1 aufgetragen sind.

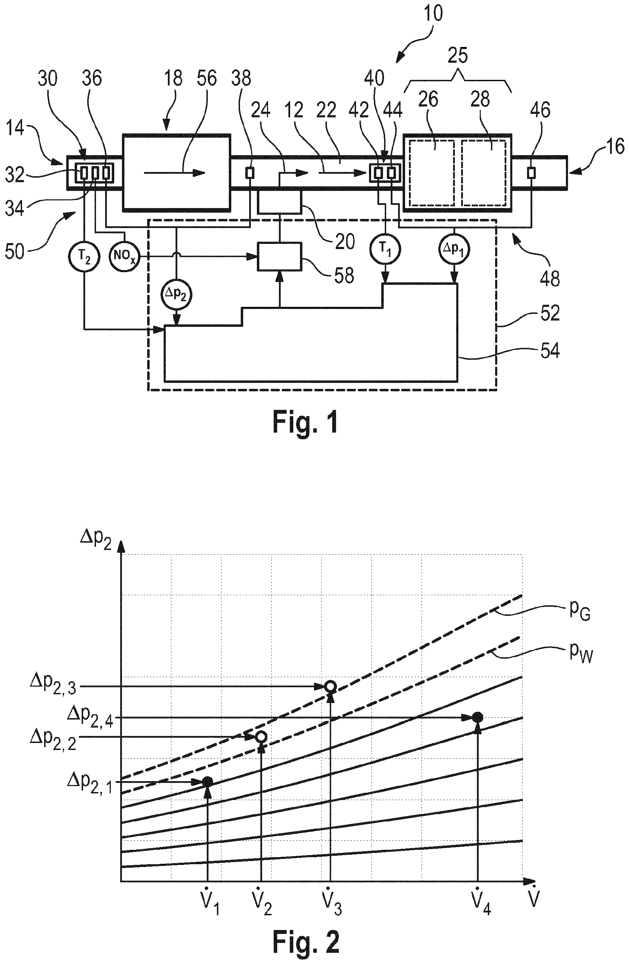

Figur 1 zeigt eine Abgasanlage 10 für einen Verbrennungsmotor.

Dabei kann ein durch einen Pfeil symbolisierter Abgasmassenstrom 12 an einer Einlassseite 14 in die Abgasanlage 10 einströmen und an einer Auslassseite 16 aus dieser ausströmen.

Entlang der Strömungsrichtung von der Einlassseite 14 zur Auslassseite 16 umfasst die Abgasanlage 10 einen Abgaspartikelfilter 18, eine Reduziermitteldosiervorrichtung 20 und eine Mischstrecke 22, die dazu ausgebildet ist, den Abgasmassenstrom 12 mit einem Volumenstrom 24 an Reduziermittel zu mischen.

An die Mischstrecke 22 schließt sich stromabwärts ein Strömungsabschnitt 25 der Abgasanlage 10 an, in dem ein SCR-Katalysator 26, also ein Katalysator dessen Wirkung auf selektiver katalytischer Reduktion beruht, und ein Oxidationskatalysator 28 angeordnet sind.

Dabei sind der SCR-Katalysator 26 und der Oxidationskatalysator 28 in einem gemeinsamen Gehäuse angeordnet.

Der Strömungsabschnitt 25 ist dabei strömungsmäßig unverzweigt mit dem Abgaspartikelfilter 18 verbunden.

Derartige Abgasanlagen 10 werden häufig in Kombination mit Verbrennungsmotoren verwendet, die gemäß dem Diesel-Prinzip arbeiten. In diesem Zusammenhang wird der Abgaspartikelfilter 18 auch als Dieselpartikelfilter (DPF) bezeichnet.

Die Abgasanlage 10 ist ferner mit zahlreichen Sensoren ausgestattet.

In diesem Zusammenhang ist auf einer stromaufwärtigen Seite am Abgaspartikelfilter 18 eine erste Sensoranordnung 30 positioniert, die einen Temperatursensor 32, einen Stickoxidkonzentrationssensor 34 sowie einen Drucksensor 36 umfasst.

Stromabwärts ist am Abgaspartikelfilter 18 ein weiterer Drucksensor 38 positioniert.

An einem stromaufwärtigen Ende des SCR-Katalysator 26 ist eine weitere Sensoranordnung 40 vorgesehen. Diese umfasst einen Temperatursensor 42 und einen Drucksensor 44.

Stromabwärts des Oxidationskatalysator 28 ist ein weiterer Drucksensor 46 positioniert.

In diesem Zusammenhang bilden der Drucksensor 44 und der Drucksensor 46 eine erste Drucksensoranordnung 48 zum Erfassen eines ersten Druckabfalls $\Delta p_1$ über dem Strömungsabschnitt 25.

In diesem Zusammenhang kann mittels der Drucksensoren 44, 46 entweder jeweils ein Absolutdruck erfasst werden. Der erste Druckabfall $\Delta p_1$ wird dann ermittelt, indem eine Differenz zwischen diesen Absolutdrücken berechnet wird.

Alternativ können die Drucksensoren 44, 46 einen Differenzdrucksensor bilden, mittels dem der erste Druckabfall $\Delta p_1$ direkt erfasst werden kann.

Die Drucksensoren 36 und 38 bilden eine zweite Drucksensoranordnung 50 zum Erfassen eines zweiten Druckabfalls $\Delta p_2$ am Abgaspartikelfilter 18.

Auch die Drucksensoren 36, 38 können jeweils einen Absolutdruck erfassen. Der zweite Druckabfall $\Delta p_2$ wird dann ermittelt, indem eine Differenz zwischen diesen Absolutdrücken berechnet wird.

Ebenso ist es möglich, dass die Drucksensoren 36, 38 einen Differenzdrucksensor bilden, mittels dem der zweite Druckabfall $\Delta p_2$ direkt erfasst werden kann.

Die Abgasanlage 10 umfasst darüber hinaus ein Steuergerät 52.

Dieses ist signaltechnisch mit allen vorgenannten Sensoren gekoppelt.

Das Steuergerät 52 ist also mit den Drucksensoren 38, 38, 44, 46, den Temperatursensoren 32, 42 und dem Stickoxidkonzentrationssensor 34 signaltechnisch gekoppelt

Dabei umfasst das Steuergerät 52 eine erste Recheneinheit 54, die dazu ausgebildet ist, einen den Abgaspartikelfilter 18 durchströmenden Abgasmassenstrom 12 anhand des mittels der ersten Drucksensoranordnung 48 ermittelten ersten Druckabfalls $\Delta p_1$ und einer mittels des Temperatursensors 44 erfassten Abgastemperatur $T_1$ zu ermitteln.

Hierfür wird zunächst der Druckabfall $\Delta p_1$ mittels der Drucksensoranordnung 48 gemessen.

Anhand der mittels des Temperatursensors 42 ermittelten Temperatur $T_1$ kann eine Dichte des Abgasmassenstroms 12 errechnet werden. Dabei sind temperaturabhängige Dichtewerte von Abgas auf der Recheneinheit 54 hinterlegt.

Die Werte für den ersten Druckabfall $\Delta p_1$ und die Dichte lassen sich in die oben genannten Gleichungen (1) und (2) einsetzen, sodass der Abgasmassenstrom 12 ermittelt werden kann.

Ferner kann mittels des Steuergeräts 52, insbesondere mittels der Recheneinheit 54, der zweite Druckabfall $\Delta p_2$ erfasst werden. Hierfür wird die Drucksensoranordnung 50 verwendet.

Zudem kann mittels des Steuergeräts 52 ein Abgasvolumenstrom 56 ermittelt werden, der durch den Abgaspartikelfilter 18 strömt.

Hierfür wird eine mittels des Temperatursensors 32 erfasste Temperatur $T_2$ verwendet, um eine Dichte des in den Abgaspartikelfilter 18 einströmenden Abgasstroms zu ermitteln. Wieder wird dafür auf die auf dem Steuergerät 52 hinterlegten Dichtewerte zurückgegriffen.

Zudem wird der Abgasmassenstrom 12 verwendet, der ja unter Nutzung des ersten Druckabfalls $\Delta p_1$ im Strömungsabschnitt 25 und der mittels des Temperatursensors 42 erfassen Temperatur $T_1$ errechnet wurde.

Anhand des Abgasmassenstroms 12 und der Dichte kann nun der Abgasvolumenstrom 56 bestimmt werden.

Das Steuergerät 52, insbesondere die Recheneinheit 54, ist auch dazu ausgebildet, eine Regenerationsnotwendigkeit für den Abgaspartikelfilter 18 zu erkennen.

Hierfür ist auf der Recheneinheit 54 das Kennfeld gemäß Figur 2 hinterlegt.

Das Kennfeld umfasst in diesem Zusammenhang in einem Abgasvolumenstrom-zweiter Druckabfall-Diagramm eine erste Kurve, die einen vom Abgasvolumenstrom V, 56 abhängigen Druck-Grenzwert $p_G$ repräsentiert.

Ferner umfasst das Kennfeld eine zweite Kurve, die einen vom Abgasvolumenstrom V, 56 abhängigen Druck-Warnwert $p_w$ repräsentiert.

Nachdem der Abgasvolumenstrom 56, wie oben erläutert, anhand des Abgasmassenstroms 12 und der mittels des Temperatursensors 32 erfassten Temperatur $T_2$ errechnet werden kann, sind die Kurven für den Druck-Grenzwert $p_G$ und den Druck-Warnwert pw also auch abhängig vom Abgasmassenstrom 12 und der Temperatur $T_2$ aufgetragen. Das ist gleichbedeutend mit einer Abhängigkeit vom Abgasvolumenstrom V, 56.

Im Betrieb der Abgasanlage 10 wird also eine zukünftige Regenerationsnotwendigkeit erkannt, wenn der zweite Druckabfall $\Delta p_2$ bei einem Abgasvolumenstrom V, 56 den durch die zweite Kurve repräsentierten, vorgegebenen Druck-Warnwert pw überschreitet.

Wird eine zukünftige Regenerationsnotwendigkeit erkannt, kann in Abhängigkeit weiterer Betriebsparameter der Abgasanlage 10 sofort eine Regeneration ausgeführt werden, bei der vom Abgaspartikelfilter 18 aufgenommene Partikel kontrolliert abgebrannt werden.

Alternativ kann mit einer solchen Regeneration auch noch für eine gewisse Zeit gewartet werden.

Im Betrieb der Abgasanlage 10 wird ferner eine Regenerationsnotwendigkeit erkannt, wenn der zweite Druckabfall $\Delta p_2$ bei einem Abgasvolumenstrom V, 56 den durch die zweite Kurve repräsentierten, vorgegebenen Druck-Grenzwert $p_G$ überschreitet. In einem solchen Fall ist sofort oder zumindest zeitnah eine Regeneration des Abgaspartikelfilters 18 notwendig.

Eine solche Regenerationsnotwendigkeit kann auch als akute Regenerationsnotwendigkeit bezeichnet werden.

Zur weiteren Illustration des Erkennens der Regenerationsnotwendigkeit sind exemplarisch vier Betriebspunkte ins Kennfeld aus Figur 2 eingezeichnet.

Dabei liegen der zweite Druckabfall $\Delta p_{2,\,1}$ und der zweite Druckabfall $\Delta p_{2,\,4}$ bei den jeweils zugehörigen Volumenströmen $\dot{V}_1$ und $\dot{V}_4$ unterhalb der den Druck-Warnwert pw repräsentierenden Kurve. In diesen Betriebspunkten liegt also weder eine zukünftige noch eine akute Regenerationsnotwendigkeit vor.

Der zweite Druckabfall $\Delta p_{2,\,2}$, der beim Abgasvolumenstrom $\dot{V}_2$ ermittelt wird, liegt oberhalb der den Druck-Warnwert $p_w$ repräsentierenden Kurve jedoch unterhalb der den Druck-Grenzwert $p_G$ repräsentierenden Kurve. In diesem Betriebspunkt wird also eine zukünftige Regenerationsnotwendigkeit erkannt.

Der zweite Druckabfall $\Delta p_{2,\,3}$, der beim Abgasvolumenstrom $\dot{V}_3$ gemessen wird, liegt oberhalb der den Druck-Grenzwert $p_G$ repräsentierenden Kurve. Hier wird also eine akute Regenerationsnotwendigkeit erkannt.

Mit Bezug auf die oben angeführte Gleichung (1) wird eine Regeneration also dann als notwendig erkannt, wenn diejenigen Anteile des Druckbeiwerts $\varsigma$, die durch Rußpartikel und Aschepartikel hervorgerufen werden, derart gestiegen sind, dass sich bei einem gegebenen Abgasmassenstrom 12 oder einem gegebenen Abgasvolumenstrom $\dot{V}$, 56 ein zugehöriger zweiter Druckabfall $\Delta p_2$ ergibt, der oberhalb des Druck-Grenzwerts $p_G$ liegt.

Das Steuergerät 52 umfasst darüber hinaus eine zweite Recheneinheit 58, die dazu ausgebildet ist, den Volumenstrom 24 an Reduziermittel zu steuern, also einen für den Abgasmassenstrom 12 geeigneten Volumenstrom 24 an Reduziermittel bereitzustellen.

Die Recheneinheit 58 ist daher mit der Reduziermitteldosiervorrichtung 20 signaltechnisch gekoppelt.

Außerdem ist das Steuergerät 52, genauer gesagt die zweite Recheneinheit 58, signaltechnisch mit dem Stickoxidkonzentrationssensor 34 gekoppelt. Ferner steht der Recheneinheit 58 der bereits ermittelte Wert für den Abgasmassenstrom 12 zur Verfügung.

Anhand dieser Kennwerte lässt sich ein Massenstrom an Stickoxiden bestimmen.

Damit kann auch ein passender, in die Mischstrecke 22 einzuspritzender Volumenstrom 24 an Reduktionsmittel eingestellt werden.

**Patentansprüche**

1. Verfahren zum Erkennen einer Regenerationsnotwendigkeit für einen Abgaspartikelfilter (18), mit den folgenden Schritten:

   a) Erfassen eines ersten Druckabfalls ($\Delta p_1$) in

einem Strömungsabschnitt (25) einer den Abgaspartikelfilter (18) umfassenden Abgasanlage (10), wobei der Strömungsabschnitt (25) strömungsmäßig unverzweigt mit dem Abgaspartikelfilter (18) verbunden ist, und wobei im Strömungsabschnitt (25) ein SCR-Katalysator (26) und/oder ein Oxidationskatalysator (28) angeordnet sind bzw. ist, wobei der Strömungsabschnitt (25) stromabwärts des Abgaspartikelfilters (18) positioniert ist, und wobei der erste Druckabfall ($\Delta p_1$) über dem SCR-Katalysator (26) und/oder dem Oxidationskatalysator (28) ermittelt wird,
b) Erfassen einer Abgastemperatur ($T_1$, $T_2$),
c) Errechnen eines den Abgaspartikelfilter (18) durchströmenden Abgasmassenstroms (12) anhand des ersten Druckabfalls ($\Delta p_1$) und der Abgastemperatur ($T_1$, $T_2$),
d) Ermitteln eines zweiten Druckabfalls ($\Delta p_2$) am Abgaspartikelfilter (18),
e) Erkennen der Regenerationsnotwendigkeit, wenn der zweite Druckabfall ($\Delta p_2$) einen vorgegebenen, vom Abgasmassenstrom (12) abhängigen Druck-Grenzwert ($p_G$) überschreitet.

2. Verfahren nach Anspruch 1, **dadurch gekennzeichnet, dass** der vorgegebene Druck-Grenzwert ($p_G$) von einer weiteren Abgastemperatur ($T_2$) abhängt, die am Abgaspartikelfilter (18) vorherrscht.

3. Verfahren nach einem der vorhergehenden Ansprüche, **dadurch gekennzeichnet, dass** die Abgastemperatur ($T_1$) eine am SCR-Katalysator (26) und/oder am Oxidationskatalysator (28) vorherrschende Abgastemperatur ist.

4. Verfahren nach einem der vorhergehenden Ansprüche, **dadurch gekennzeichnet, dass** der Druck-Grenzwert ($p_G$) in Form eines Kennfelds bereitgestellt wird.

5. Verfahren nach einem der vorhergehenden Ansprüche, **dadurch gekennzeichnet, dass** eine zukünftige Regenerationsnotwendigkeit erkannt wird, wenn der zweite Druckabfall ($\Delta p_2$) einen vorgegebenen Druck-Warnwert (pw) überschreitet, wobei der Druck-Warnwert (pw) kleiner ist als der Druck-Grenzwert ($p_G$).

6. Abgasanlage (10) für einen Verbrennungsmotor,

mit einem Abgaspartikelfilter (18),
einem Strömungsabschnitt (25), der strömungsmäßig unverzweigt mit dem Abgaspartikelfilter (18) verbunden ist, wobei im Strömungsabschnitt (25) ein SCR-Katalysator (26) und/oder ein Oxidationskatalysator (28) angeordnet sind bzw. ist, wobei der Strömungsabschnitt (25) stromabwärts des Abgaspartikelfilters (18) positioniert ist,
einer ersten Drucksensoranordnung (48) zum Erfassen eines ersten Druckabfalls ($\Delta p_1$) über dem Strömungsabschnitt (25), einer zweiten Drucksensoranordnung (50) zum Erfassen eines zweiten Druckabfalls ($\Delta p_2$) am Abgaspartikelfilter (18),
einem Temperatursensor (32, 42) zum Erfassen einer Abgastemperatur ($T_1$, $T_2$), und
einem Steuergerät (52), das signaltechnisch mit der ersten Drucksensoranordnung (48), der zweiten Drucksensoranordnung (50) und dem Temperatursensor (32, 42) gekoppelt ist, wobei das Steuergerät (52) dazu ausgebildet ist,

a) einen den Abgaspartikelfilter (18) durchströmenden Abgasmassenstrom (12) anhand eines mittels der ersten Drucksensoranordnung (48) erfassten ersten Druckabfalls ($\Delta p_1$) und einer mittels des Temperatursensors (32, 42) erfassten Abgastemperatur ($T_1$, $T_2$) zu ermitteln, und
b) eine Regenerationsnotwendigkeit für den Abgaspartikelfilter (18) zu erkennen, wenn der mittels der zweiten Drucksensoranordnung (50) erfasste zweite Druckabfall ($\Delta p_2$) einen vorgegebenen, vom Abgasmassenstrom (12) abhängigen Druck-Grenzwert ($p_G$) überschreitet.

7. Abgasanlage (10) nach Anspruch 6, **gekennzeichnet durch** einen weiteren Temperatursensor (32), der im oder am Abgaspartikelfilter (18) angeordnet und signaltechnisch mit dem Steuergerät (52) verbunden ist.

**Claims**

1. A method of detecting a need for regeneration of an exhaust particulate filter (18), comprising the steps of:

(a) detecting a first pressure drop ($\Delta p_1$) in a flow section (25) of an exhaust system (10) comprising the exhaust particulate filter (18), the flow section (25) being connected to the exhaust particulate filter (18) in a fluidically unbranched manner, and an SCR catalytic converter (26) and/or an oxidation catalytic converter (28) being arranged in the flow section (25), the flow section (25) being positioned downstream of the exhaust particulate filter (18), and wherein the first pressure drop ($\Delta p_1$) is determined across the SCR catalytic converter (26) and/or the oxidation catalytic converter (28);
(b) sensing an exhaust gas temperature ($T_1$, $T_2$);

(c) calculating an exhaust gas mass flow (12) flowing through the exhaust particulate filter (18) on the basis of the first pressure drop ($\Delta p_1$) and the exhaust gas temperature ($T_1$, $T_2$);

(d) determining a second pressure drop ($\Delta p_2$) across the exhaust particulate filter (18);

(e) identifying the need for regeneration when the second pressure drop ($\Delta p_2$) exceeds a predefined pressure limit value ($p_G$) dependent on the exhaust gas mass flow (12).

2. The method according to claim 1, **characterized in that** the predefined pressure limit value ($p_G$) depends on a further exhaust gas temperature ($T_2$) prevailing at the exhaust particulate filter (18).

3. The method according to either of the preceding claims, **characterized in that** the exhaust gas temperature ($T_1$) is an exhaust gas temperature prevailing at the SCR catalytic converter (26) and/or at the oxidation catalytic converter (28).

4. The method according to any of the preceding claims, **characterized in that** the pressure limit value ($p_G$) is provided in the form of a characteristic map.

5. The method according to any of the preceding claims, **characterized in that** a future need for regeneration is identified when the second pressure drop ($\Delta p_2$) exceeds a predefined pressure warning value (pw), the pressure warning value ($p_w$) being smaller than the pressure limit value ($p_G$).

6. An exhaust system (10) for an internal combustion engine,

comprising an exhaust particulate filter (18), a flow section (25) connected to the exhaust particulate filter (18) in a fluidically unbranched manner, an SCR catalytic converter (26) and/or an oxidation catalytic converter (28) being arranged in the flow section (25), the flow section (25) being positioned downstream of the exhaust particulate filter (18), a first pressure sensor arrangement (48) for sensing a first pressure drop ($\Delta p_1$) across the flow section (25), a second pressure sensor arrangement (50) for sensing a second pressure drop ($\Delta p_2$) at the exhaust particulate filter (18), a temperature sensor (32, 42) for sensing an exhaust gas temperature ($T_1$, $T_2$), and a control device (52) which is coupled to the first pressure sensor arrangement (48), the second pressure sensor arrangement (50) and the temperature sensor (32, 42) in terms of signaling, the control device (52) being configured to

(a) determine an exhaust gas mass flow (12) flowing through the exhaust particulate filter (18) on the basis of a first pressure drop ($\Delta p_1$) detected by means of the first pressure sensor arrangement (48) and an exhaust gas temperature ($T_1$, $T_2$) sensed by means of the temperature sensor (32, 42); and

(b) identify a need for regeneration of the exhaust particulate filter (18) when the second pressure drop ($\Delta p_2$) detected by means of the second pressure sensor arrangement (50) exceeds a predefined pressure limit value ($p_G$) dependent on the exhaust gas mass flow (12).

7. The exhaust system (10) according to claim 6, **characterized by** a further temperature sensor (32) which is arranged in or on the exhaust particulate filter (18) and is connected to the control device (52) in terms of signaling.

**Revendications**

1. Procédé de détection d'une nécessité de régénération pour un filtre à particules de gaz d'échappement (18), comprenant les étapes suivantes :

a) la saisie d'une première chute de pression ($\Delta p_1$) dans un tronçon d'écoulement (25) d'un système d'échappement (10) comprenant le filtre à particules de gaz d'échappement (18), le tronçon d'écoulement (25), en termes d'écoulement, étant relié sans ramification au filtre à particules de gaz d'échappement (18), et un catalyseur SCR (26) et/ou un catalyseur d'oxydation (28) étant agencé(s) dans le tronçon d'écoulement (25), le tronçon d'écoulement (25) étant positionné en aval du filtre à particules de gaz d'échappement (18), et la première chute de pression ($\Delta p_1$) étant déterminée sur le catalyseur SCR (26) et/ou le catalyseur d'oxydation (28),

b) la saisie d'une température ($T_1$, $T_2$) des gaz d'échappement,

c) le calcul d'un flux massique de gaz d'échappement (12) traversant le filtre à particules de gaz d'échappement (18) sur la base de la première chute de pression ($\Delta p_1$) et de la température ($T_1$, $T_2$) des gaz d'échappement,

d) la détermination d'une deuxième chute de pression ($\Delta p_2$) au niveau du filtre à particules de gaz d'échappement (18),

e) le détection d'une nécessité de régénération lorsque la deuxième chute de pression ($\Delta p_2$) excède une valeur de pression limite prédéterminée ($p_G$) qui dépend du flux massique de gaz d'échappement (12).

2. Procédé selon la revendication 1, **caractérisé en ce que** la valeur de pression limite prédéterminée ($p_G$) dépend d'une température ($T_2$) des gaz d'échappement supplémentaire régnant au niveau du filtre à particules de gaz d'échappement (18).

3. Procédé selon l'une des revendications précédentes, **caractérisé en ce que** la température ($T_1$) des gaz d'échappement est une température des gaz d'échappement régnant au niveau du catalyseur SCR (26) et/ou au niveau du catalyseur d'oxydation (28).

4. Procédé selon l'une des revendications précédentes, **caractérisé en ce que** la valeur de pression limite ($p_G$) est fournie sous forme de diagramme caractéristique.

5. Procédé selon l'une des revendications précédentes, **caractérisé en ce qu'**une nécessité de régénération future est détectée lorsque la deuxième chute de pression ($\Delta p_2$) excède une valeur de pression d'avertissement prédéterminée ($p_w$), la valeur de pression d'avertissement ($p_w$) étant inférieure à la valeur de pression limite ($p_G$).

6. Système d'échappement (10) pour un moteur à combustion interne,

comprenant un filtre à particules de gaz d'échappement (18),
un tronçon d'écoulement (25) qui, en termes d'écoulement, est relié sans ramification au filtre à particules de gaz d'échappement (18), un catalyseur SCR (26) et/ou un catalyseur d'oxydation (28) étant agencé(s) dans le tronçon d'écoulement (25), le tronçon d'écoulement (25) étant positionné en aval du filtre à particules de gaz d'échappement (18),
un premier agencement capteur de pression (48) pour la saisie d'une première chute de pression ($\Delta p_1$) sur le tronçon d'écoulement (25), un deuxième agencement capteur de pression (50) pour la saisie d'une deuxième chute de pression ($\Delta p_2$) sur le filtre à particules de gaz d'échappement (18),
un capteur de température (32, 42) pour la saisie d'une température ($T_1$, $T_2$) des gaz d'échappement, et
un dispositif de commande (52) qui est couplé, en termes de signalisation, au premier agencement capteur de pression (48), au deuxième agencement capteur de pression (50) et au capteur de température (32, 42), le dispositif de commande (52) étant réalisé de manière

a) à déterminer un flux massique de gaz d'échappement (12) traversant le filtre à particules de gaz d'échappement (18) sur la base d'une première chute de pression ($\Delta p_1$) saisie au moyen du premier agencement capteur de pression (48) et d'une température ($T_1$, $T_2$) des gaz d'échappement saisie au moyen du capteur de température (32, 42), et

b) à détecter une nécessité de régénération pour le filtre à particules de gaz d'échappement (18), lorsque la deuxième chute de pression ($\Delta p_2$) saisie au moyen du deuxième agencement capteur de pression (50) excède une valeur de pression limite prédéterminée ($p_G$) qui dépend du flux massique de gaz d'échappement (12).

7. Système d'échappement (10) selon la revendication 6, **caractérisé par** un capteur de température (32) supplémentaire qui est agencé dans ou sur le filtre à particules de gaz d'échappement (18) et qui est relié, en termes de signalisation, au dispositif de commande (52).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016133443 A1

- WO 9403711 A1